# EUROPEAN PATENT APPLICATION

(11) **EP 4 692 760 A1**
(43) Date of publication of application: **11.02.2026**
(21) Application number: 24779033.0
(22) Date of filing: 29.02.2024
(51) Int. Cl.: G01N 21/01, G01N 21/27, G01N 35/00

(54) **ANALYSIS DEVICE, DETERMINATION METHOD, AND PREDICTION METHOD**

(30) Priority: 27.03.2023 JP 2023049397
(71) Applicant: HITACHI HIGH-TECH CORPORATION, Tokyo 105-6409 (JP)
(72) Inventor: KAWAKAMI, Shoko, Tokyo 100-8280 (JP); ANDO, Takahiro, Tokyo 100-8280 (JP); ADACHI, Sakuichiro, Tokyo 105-6409 (JP); HORIKAWA, Hiroshi, Tokyo 105-6409 (JP); TAKAHASHI, Takuya, Tokyo 105-6409 (JP); FUKAYA, Masashi, Tokyo 105-6409 (JP)
(74) Representative: Mewburn Ellis LLP
(86) International application number: PCT/JP2024/007496
(87) International publication number: WO 2024/202894

(57) **Abstract**

The present disclosure proposes an automatic analysis device including: a reaction cell 108 configured to hold a reaction solution 107 to be analyzed; an LED light source 301 configured to irradiate a liquid in the reaction cell 108 with light; a detector array 3022 configured to detect light emitted from the liquid when the reaction solution 107 is irradiated with the light from the LED light source 301; and a data processing unit 203 configured to determine a state of the LED light source 301 using a time t required until a light amount of the light from the LED light source 301 is stabilized after the LED light source 301 is turned on, in order to determine the state of the LED light source and predict a replacement time of the LED light source using the time from turning on of the LED light source to the stabilization of the light amount (see FIG. 4).

## Description

### Technical Field

The present disclosure relates to an analysis device including an LED light source that irradiates an analysis target with light, a determination method of determining a state of the LED light source, and a prediction method of predicting a replacement time of the LED light source.

### Background Art

There is an analysis device that analyzes an amount of components such as proteins, sugars, lipids, enzymes, hormones, inorganic ions, and disease markers contained in a biological sample such as blood and urine. In the analysis device, it is common to pipette a specimen and a reagent into a container for holding a liquid and analyze an inspection item on the basis of a change in optical characteristics such as light absorption, fluorescence, and light emission. In the absorption analysis of the analysis device, light from a light source is applied to a sample or a reaction solution in which the sample and the reagent are mixed, and a light receiving element measures an amount of transmitted light at a single or a plurality of measurement wavelengths that has passed through the sample or the reaction solution to calculate absorbance. Then, the component amount is obtained from a relationship between the calculated absorbance and the concentration.

It is desirable for the light source for the absorption analysis to have a wide emission spectrum in order to handle a large number of inspection items, and to be able to stably obtain a light amount of a certain amount or more at a measurement wavelength in order to perform highly accurate absorbance measurement. Therefore, conventionally, a xenon lamp, a halogen lamp, or the like has been used.

In order to reduce the replacement frequency of the light source, in recent years, a light emitting diode (hereinafter LED) expected to have a long life has been studied as a light source for the absorption analysis. However, similarly to a xenon lamp, a halogen lamp, or the like, even in a case where an LED is adopted as a light source for absorption analysis, when the LED is used for a long time, materials such as a light-emitting chip, a phosphor, and a resin change over time, and the amount of light gradually decreases. Therefore, even in a case where an LED light source is adopted, a determination method of a state suitable for the LED light source and a prediction method of a replacement time are required.

In general, the replacement time of the LED light source used for a lighting fixture or the like may be predicted when the light amount of the LED light source becomes less than or equal to a threshold (for example, 70%) of an initial light amount. PTL 1 discloses a technique "for integrating the lighting time of an LED while it is turned on, and notifying that the LED has reached the end of its life when the integrated lighting time reaches a preset life time". PTL 2 discloses "LED deterioration measurement device for determining a degree of deterioration of an LED on the basis of forward voltage-forward current characteristics of the LED".

### Citation List

### Patent Literature

PTL 1: JP H10-39836 A
PTL 2: JP 2015-32793 A

### Summary of Invention

### Technical Problem

Similarly to the state determination and the replacement time prediction of the conventional light source, in a case where it is determined that the LED light source is in the deterioration state or the replacement time when the light amount of the LED light source becomes less than or equal to the threshold (for example, 70%) of the initial light amount, the initial light amount may vary depending on individual differences of the LED light sources. Even if the light amount becomes less than or equal to the threshold of the initial amount of light, due to the variation in the initial light amount, there is a possibility that replacement occurs although the amount of light for maintaining the analysis performance of the analysis device is sufficient. In a case where it is determined that the LED light source is in the deterioration state or the replacement time when the lighting time of the LED light source reaches the preset life time, there is a possibility that replacement occurs due to individual differences of the LED light sources, use environmental conditions, and the like even though there is a sufficient amount of light for maintaining the analysis performance of the analysis device. As described above, in the conventional state determination and replacement time prediction, the state of the LED light source and the replacement prediction timing cannot be determined for each LED light source although the state differs for each LED light source depending on individual differences of the LED light sources, use environmental conditions, and the like. In order to use the forward voltage-forward current characteristics as in PTL 2, a new measurement system for monitoring the current and voltage applied to the LED light source is required.

Therefore, an object of the present disclosure is to determine the state of the LED light source and predict the replacement time of the LED light source using the time from the lighting of the LED light source to the stabilization of the light amount.

### Solution to Problem

An analysis device of the present disclosure includes: a container configured to hold a liquid to be analyzed; a light-emitting diode (LED) light source configured to irradiate the liquid in the container with light; a photodetector configured to detect light emitted from the liquid when the liquid is irradiated with light from the LED light source; and a data processor configured to determine a state of the LED light source by using a time required until a light amount of the light from the LED light source is stabilized after the LED light source is turned on.

An analysis device of the present disclosure includes: a container configured to hold a liquid to be analyzed; a light-emitting diode (LED) light source configured to irradiate the liquid in the container with light; a photodetector configured to detect light emitted from the liquid when the liquid is irradiated with light from the LED light source; and
a data processor configured to predict a replacement time of the LED light source based on a correlation between a time required until a light amount of the light from the LED light source is stabilized after the LED light source is turned on and an energization time of the LED light source.

A determination method of the present disclosure is a determination method of determining a state of a light-emitting diode (LED) light source of an analysis device including a container configured to hold a liquid to be analyzed, the LED light source configured to irradiate the liquid in the container with light, and a photodetector configured to detect light emitted from the liquid when the liquid is irradiated with light from the LED light source, the determination method including: turning on the LED light source; measuring a time required until a light amount of the light from the LED light source is stabilized after the LED light source is turned on; and determining a state of the LED light source using the measured time.

A prediction method of the present disclosure is a prediction method of predicting a replacement time of a light-emitting diode (LED) light source of an analysis device including a container configured to hold a liquid to be analyzed, the LED light source configured to irradiate the liquid in the container with light, and a photodetector configured to detect light emitted from the liquid when the liquid is irradiated with light from the LED light source, the prediction method including: turning on the LED light source; measuring a time required until a light amount of the light from the LED light source is stabilized after the LED light source is turned on; and predicting a replacement time of the LED light source based on a correlation between the measured time and an energization time of the LED light source.

### Advantageous Effects of Invention

According to the present disclosure, it is possible to perform the determination of the state of the LED light source and the prediction of the replacement time of the LED light source using the time from the lighting of the LED light source to the stabilization of the light amount. Problems, configurations, and effects other than those described above will be clarified in the following description of embodiments.

### Brief Description of Drawings

[FIG. 1] FIG. 1 is a schematic diagram illustrating an overall configuration example of an automatic analysis device 100.
[FIG. 2] FIG. 2 is a hardware block diagram of a data processing unit 203.
[FIG. 3] FIG. 3 is a diagram illustrating contents of history data 2033a.
[FIG. 4] FIG. 4 is a diagram illustrating a configuration example of an absorbance measurement unit 113 that measures absorbance of the automatic analysis device 100.
[FIG. 5] FIG. 5 is a flowchart illustrating an operation of the automatic analysis device 100.
[FIG. 6] FIG. 6 is a flowchart illustrating details of state determination processing.
[FIG. 7] FIG. 7 is a flowchart illustrating details of replacement time prediction processing.
[FIG. 8] FIG. 8 is a graph illustrating results of light amount variation immediately after white LEDs with energization times of 0 hour and 10,000 hours are turned on.
[FIG. 9] FIG. 9 is a diagram illustrating a correlation between an energization time of an LED and a time from when the LED is turned on to when a light amount becomes stable.

### Description of Embodiments

Embodiments of the present disclosure will be described in detail with reference to the drawings. In the following embodiments, it goes without saying that the components (including element steps and the like) are not necessarily essential unless otherwise specified or considered to be obviously essential in principle.

Hereinafter, embodiments of the present disclosure will be described with reference to the drawings.

### (Automatic analysis device 100)

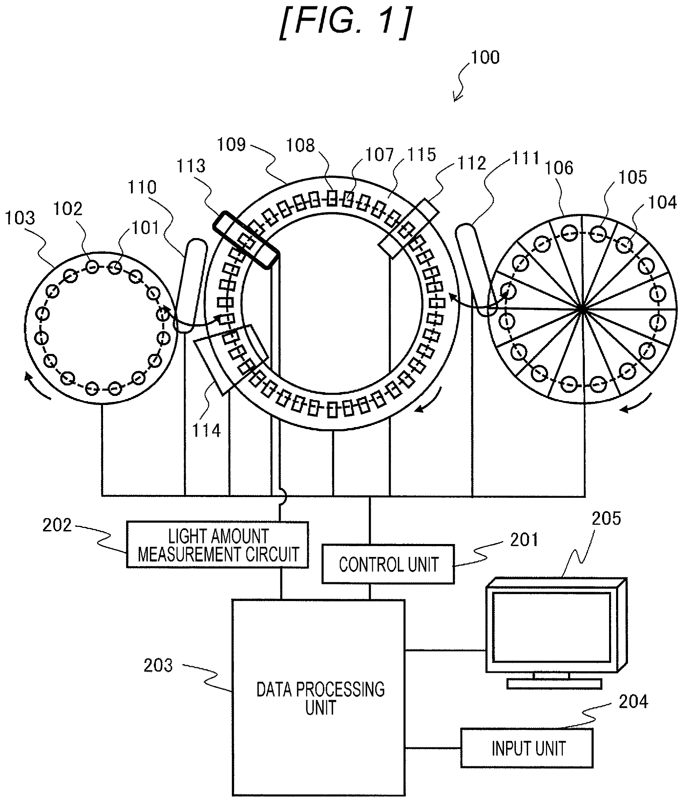

An outline of an automatic analysis device 100 according to the present embodiment will be described with reference to FIG. 1. The automatic analysis device 100 of FIG. 1 includes three types of disks including a sample disk 103, a reagent disk 106, and a reaction disk 109, a pipetting mechanism that moves a sample and a reagent between these disks, and a control unit 201 that controls these disks. Furthermore, the automatic analysis device 100 includes a light amount measurement circuit 202 that measures absorbance of a liquid (reaction solution) to be analyzed, a data processing unit 203 that processes measurement data measured by the light amount measurement circuit 202, and an input unit 204 and an output unit 205 that are interfaces with the data processing unit 203. The pipetting mechanism includes a sample pipetting mechanism 110 and a reagent pipetting mechanism 111.

The data processing unit 203 stores the measurement data measured by the light amount measurement circuit 202 and analyzes the stored measurement data. The analysis result is output to the output unit 205, for example. Details of the data processing unit 203 will be described later.

The input unit 204 and the output unit 205 input and output data to and from the data processing unit 203. The input unit 204 is an information input device such as a keyboard, a touch panel, and a numeric keypad. The output unit 205 is an information output device for outputting an analysis result of the automatic analysis device 100, and is, for example, a display or the like.

On the circumference of the sample disk 103, a plurality of sample cups 102, which are holding containers for samples 101, are arranged. The sample 101 is, for example, blood. On the circumference of the reagent disk 106, a plurality of reagent bottles 105, which are holding containers for reagents 104, are arranged. On the circumference of the reaction disk 109, a plurality of reaction cells 108, which are containers for holding the reaction solution 107 to be analyzed obtained by mixing the sample 101 and the reagent 104, are arranged.

The sample pipetting mechanism 110 is a mechanism used when the sample 101 is moved from the sample cup 102 to the reaction cell 108 by a certain amount. The sample pipetting mechanism 110 includes, for example, a nozzle that discharges or aspires a solution, a robot that positions and conveys the nozzle to a predetermined position, a pump that discharges a solution from the nozzle or aspires the solution to the nozzle, and a flow path that connects the nozzle and the pump.

The reagent pipetting mechanism 111 is a mechanism used when the reagent 104 is moved from the reagent bottle 105 to the reaction cell 108 by a certain amount. The reagent pipetting mechanism 111 also includes, for example, a nozzle that discharges or aspires a solution, a robot that positions and conveys the nozzle to a predetermined position, a pump that discharges a solution from the nozzle or aspires the solution to the nozzle, and a flow path that connects the nozzle and the pump.

A solution stirring unit 112 is a mechanism unit that stirs and mixes the sample 101 and the reagent 104 in the reaction cell 108. A cleaning unit 114 is a mechanism unit that discharges the reaction solution 107 from the reaction cell 108 in which analysis processing is completed, and then cleans the reaction cell 108. The next sample 101 is pipetted again from the sample pipetting mechanism 110 to the reaction cell 108 after completion of cleaning, and a new reagent 104 is pipetted from the reagent pipetting mechanism 111 and used for another reaction processing.

In the reaction disk 109, the reaction cells 108 are immersed in a thermostatic fluid 115 in a thermostatic chamber whose temperature and flow rate are controlled. For this reason, the temperature of the reaction cells 108 and the reaction solutions 107 therein is maintained at a constant temperature by the control unit 201 even during the movement by the reaction disk 109. As the thermostatic fluid 115, for example, water or air is used.

An absorbance measurement unit 113 that performs absorption analysis in the automatic analysis device 100 is disposed on a part of the circumference of the reaction disk 109.

### (Data processing unit 203)

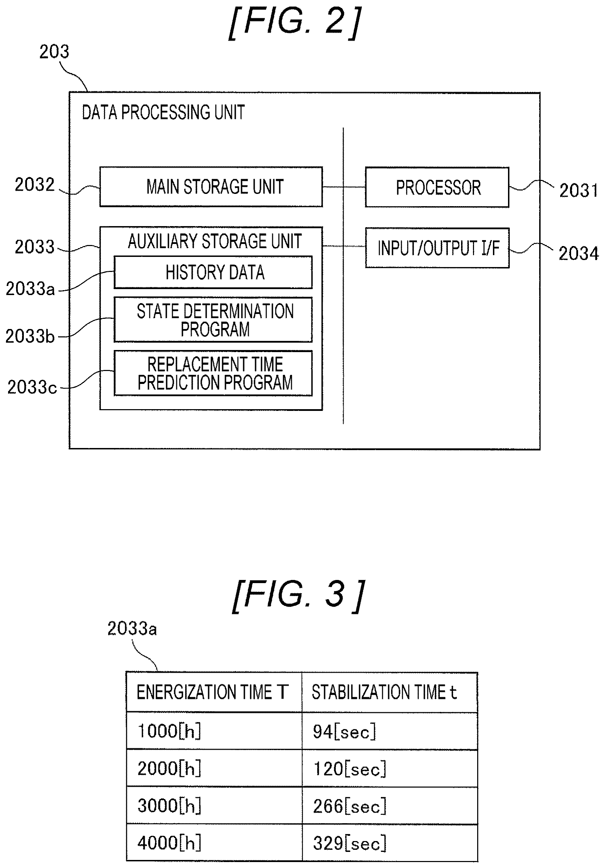

FIG. 2 is a hardware block diagram of the data processing unit 203. The data processing unit 203 includes a processor 2031, a main storage unit 2032, an auxiliary storage unit 2033, and an input/output I/F 2034. The processor 2031 is a central processing unit (CPU), a graphics processing unit (GPU), a digital signal processor (DSP), an ASIC, or the like. The main storage unit 2032 is a dynamic random access memory (DRAM) or the like, and is used as a work area of the processor 2031. The auxiliary storage unit 2033 is a hard disk drive (HDD), a solid state drive (SSD), a combination thereof, or the like, and stores various programs and various data. The input/output I/F 2034 is an interface that communicably connects the data processing unit 203 and a peripheral device (for example, the control unit 201, the light amount measurement circuit 202, the input unit 204, and the output unit 205) of the data processing unit 203.

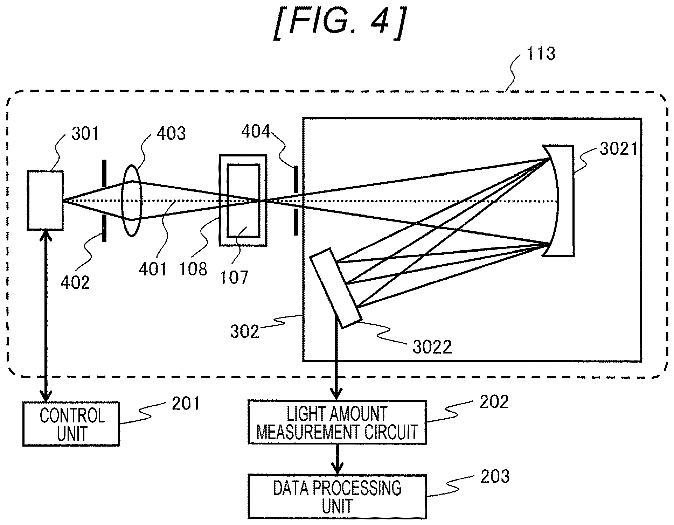

The auxiliary storage unit 2033 of the present embodiment stores history data 2033a, a state determination program 2033b, and a replacement time prediction program 2033c. The state determination program 2033b is a program for determining the state of a LED light source 301 (see FIG. 4) using the time t required for the light amount of light from the LED light source 301 to become stable (hereinafter, appropriately referred to as "time t until the light amount becomes stable"). By executing the state determination program 2033b, the processor 2031 determines the state of the LED light source 301 using the time t required until the light amount of the light from the LED light source 301 becomes stable, and outputs a determination result. The replacement time prediction program 2033c is a program that predicts the replacement time of the LED light source 301 based on the correlation between the time t until the light amount becomes stable and the energization time T of the LED light source 301. By executing the replacement time prediction program 2033c, the processor 2031 predicts the replacement time of the LED light source 301 using the time t required until the light amount of the light from the LED light source 301 becomes stable, and outputs a prediction result.

The auxiliary storage unit 2033 may store measurement data measured by the light amount measurement circuit 202, an analysis program for analyzing the measurement data, an analysis result analyzed by the analysis program, and the like.

### (History data 2033a)

FIG. 3 is a diagram illustrating the contents of the history data 2033a. In the history data 2033a, an energization time T of the LED light source 301 and a time t, which is a time measured at the energization time T and required until the light amount of the light from the LED light source 301 becomes stable, are stored in association with each other. In the example of FIG. 3, the time t until the light amount becomes stable is measured every 1000 hours. The measurement interval of the time t until the light amount becomes stable is not limited to 1000 hours, and may be shorter than 1000 hours or longer than 1000 hours. In the example of FIG. 3, the time t until the light amount becomes stable is measured at equal intervals. Alternatively, the measurement intervals of the time t until the light amount becomes stable may not be equal intervals. Instead of the energization time T of the LED light source 301 or in addition to the energization time T of the LED light source 301, the operating time of the automatic analysis device 100 may be used.

When the time t until the light amount becomes stable is newly measured, the measured time t until the light amount becomes stable is stored in association with the energization time T in the new record of the history data 2033a.

### (Absorbance measurement unit 113)

FIG. 4 is a diagram illustrating a configuration example of an absorbance measurement unit 113 that measures absorbance of the automatic analysis device 100. In the automatic analysis device 100 of the present embodiment, the light-emitting diode (LED) light source 301 is used as a light source unit for absorbance measurement. The irradiation light generated from the LED light source 301 is extracted along an optical axis 401, condensed by a condensing lens 403, and applied to the reaction solution 107 in the reaction cell 108. In this configuration, in order to make a light amount distribution in a light irradiation surface uniform, a light source-side slit 402 may be disposed to limit a width of the extracted light from the LED light source 301.

The light transmitted through the reaction solution 107 in the reaction cell 108 is dispersed by a diffraction grating 3021 in a spectrometer 302 and received by a detector array 3022 including a large number of light receivers. The detector array 3022 is an example of a photodetector. Since light that has not passed through the reaction solution 107 becomes noise, a spectrometer-side slit 404 may be disposed to prevent such stray light from entering the spectrometer 302. In the present embodiment, the detector array 3022 detects light transmitted through the reaction solution 107, but the detector array 3022 (photodetector) may detect light (for example, optical characteristics such as light absorption, fluorescence, and light emission) emitted from the reaction solution 107.

The detector array 3022 receives a plurality of measurement wavelengths. The light received by the detector array 3022 is converted into an electric signal (light reception signal) and stored as measurement data in the auxiliary storage unit 2033 of the data processing unit 203 via the light amount measurement circuit 202.

On the other hand, the absorbance measurement unit 113 is also used to measure the time t until the light amount becomes stable, which is required until the light amount of the light from the LED light source 301 becomes stable. When the time t until the light amount becomes stable is measured, the reaction cell 108 is not installed on the optical axis 401, or the reaction cell 108 in which the reaction solution 107 is not held is installed. The irradiation light generated from the LED light source 301 is extracted along the optical axis 401 and condensed by the condensing lens 403. The condensed light is dispersed by the diffraction grating 3021 and received by the detector array 3022. The light received by the detector array 3022 is converted into an electric signal (light reception signal) and stored in the auxiliary storage unit 2033 of the data processing unit 203 as the history data 2033a via the light amount measurement circuit 202.

### (Control example of automatic analysis device 100 by control unit 201)

The calculation of the amounts of components such as proteins, sugars, and lipids contained in the sample 101 is performed by the following procedure as an example. First, the control unit 201 instructs the cleaning unit 114 to clean the reaction cell 108. Next, the control unit 201 instructs the sample pipetting mechanism 110 to pipette a certain amount of the sample 101 in the sample cup 102 into the reaction cell 108. Next, the control unit 201 instructs the reagent pipetting mechanism 111 to pipette a certain amount of the reagent 104 in the reagent bottle 105 into the reaction cell 108.

At the time of pipetting each solution, the control unit 201 instructs a drive unit of each disk to rotationally drive the sample disk 103, the reagent disk 106, and the reaction disk 109. At this time, the sample cup 102, the reagent bottle 105, and the reaction cell 108 are positioned at predetermined pipetting positions according to drive timings of the corresponding pipetting mechanisms.

Subsequently, the control unit 201 instructs the solution stirring unit 112 to stir the sample 101 and the reagent 104 pipetted into the reaction cell 108 to generate the reaction solution 107. By the rotation of the reaction disk 109, the reaction cell 108 holding the reaction solution 107 passes through the measurement position where the absorbance measurement unit 113 is disposed. Each time the reaction cell 108 passes through the measurement position, the amount of transmitted light from the reaction solution 107 is measured via the absorbance measurement unit 113. The measurement data is sequentially output to the auxiliary storage unit 2033 and accumulated as reaction process data.

During the accumulation of the reaction process data, if necessary, another reagent 104 is additionally pipetted into the reaction cell 108 by the reagent pipetting mechanism 111, stirred by the solution stirring unit 112, and further measured for a certain period of time. As a result, reaction process data acquired at regular time intervals is stored in the auxiliary storage unit 2033.

### (Operation flow of automatic analysis device 100)

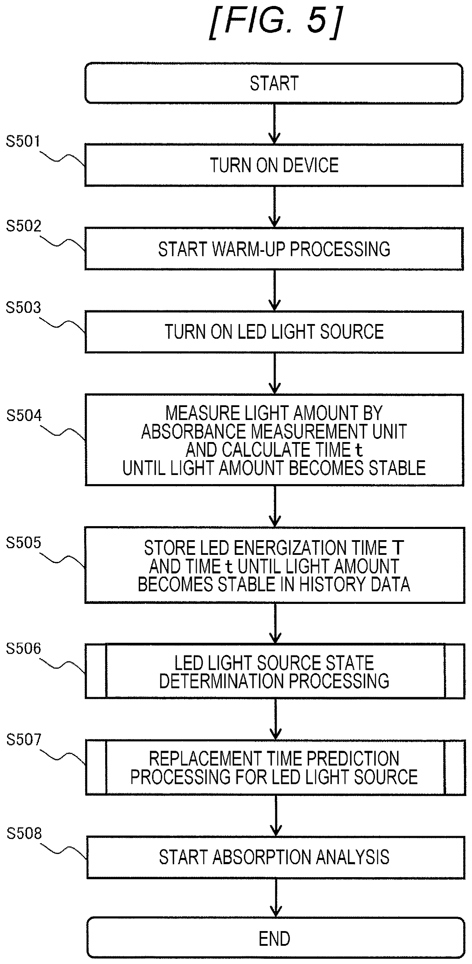

FIG. 5 is a flowchart illustrating the operation of the automatic analysis device 100. When the power is turned on (S501), the automatic analysis device 100 starts warm-up processing (S502). The warm-up processing includes activation of various software and operation check of each unit before analysis. The time required for the warm-up processing is referred to as a warm-up time.

The automatic analysis device 100 turns on the LED light source 301 during the warm-up processing (S503). The light amount of light emitted from the LED light source 301 takes time to become stable after the LED light source 301 is turned on. At least until the warm-up processing is completed, the light from the LED light source 301 is not used for absorption analysis. The time t until the light amount becomes stable is caused by a rising characteristic of the LED light source 301, and differs for each LED used for the LED light source 301. In the present embodiment, focusing on the rising characteristic of the LED light source 301, the time t until the light amount becomes stable due to the rising characteristic of the LED light source 301 is used for predicting the state of the LED light source 301 and the replacement time of the LED light source 301.

The absorbance measurement unit 113 measures the light amount of the LED light source 301, and the data processing unit 203 calculates the time t until the light amount becomes stable on the basis of the measured light amount (S504).

The data processing unit 203 stores the calculated time t until the light amount becomes stable and the energization time T of the LED light source 301 in association with each other in the history data 2033a (S505). The energization time T of the LED light source 301 is stored in the auxiliary storage unit 2033 of the data processing unit 203, for example. The data processing unit 203 acquires the energization time T of the LED light source 301 stored in the auxiliary storage unit 2033, and stores the calculated time t until the light amount becomes stable and the acquired energization time T of the LED light source 301 in the history data 2033a in association with each other.

Then, the data processing unit 203 executes state determination processing of determining the state of the LED light source 301 (S506). Details of the state determination processing will be described later.

The data processing unit 203 executes replacement time prediction processing of predicting the replacement time of the LED light source 301 (S507). Details of the replacement time prediction will be described later.

The automatic analysis device 100 according to the present embodiment executes both the state determination processing (S506) and the replacement time prediction processing (S507). Alternatively, the automatic analysis device 100 may execute only one of the state determination processing (S506) and the replacement time prediction processing (S507).

When the warm-up processing is completed and analysis by the automatic analysis device 100 becomes possible, the automatic analysis device 100 starts absorption analysis for measuring the absorbance of the reaction solution 107 in the reaction cell 108 by controlling the LED light source 301 to irradiate the reaction solution 107 with light (S508).

### (State determination method for LED light source 301)

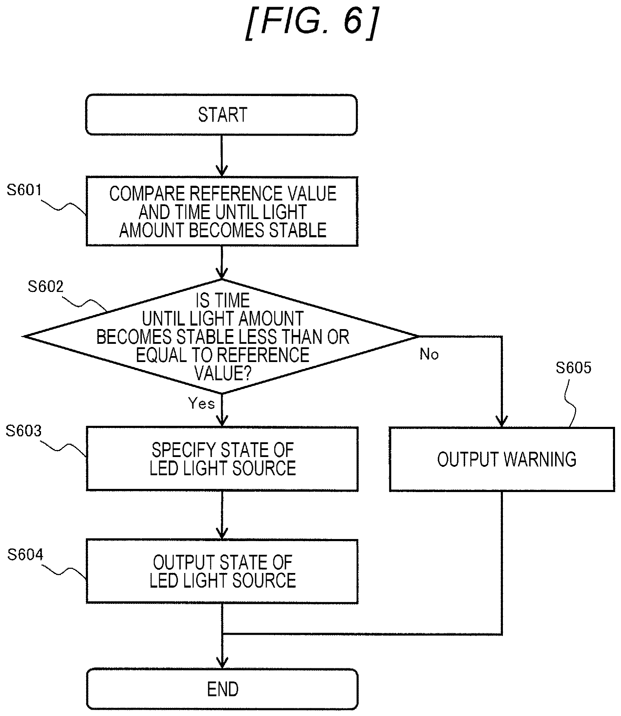

FIG. 6 is a flowchart illustrating details of the state determination processing. For example, the processor 2031 of the data processing unit 203 executes each step of the flowchart of FIG. 6 by executing the state determination program 2033b stored in the auxiliary storage unit 2033.

The data processing unit 203 compares the time t until the light amount becomes stable calculated in S504 with a reference value (S601). The reference value is stored in advance in the auxiliary storage unit 2033 of the data processing unit 203, for example.

The data processing unit 203 determines whether the time t until the light amount becomes stable is less than or equal to the reference value according to a comparison result of S601 (S602).

When it is determined that the time t until the light amount becomes stable is less than or equal to the reference value (S602: Yes), the data processing unit 203 specifies the state of the LED light source 301 (S603). For example, the data processing unit 203 may specify the state of the LED light source 301 based on a magnitude of a difference between the time t until the light amount becomes stable and the reference value, or may specify the state of the LED light source 301 based on the time t until the light amount becomes stable. The state of the LED light source 301 is, for example, a deterioration state indicating a degree of deterioration of the LED light source 301, a use state indicating a degree of use of the LED light source 301, and the like.

The data processing unit 203 outputs (displays) the specified state of the LED light source 301 to the output unit 205 (a display) (S604).

On the other hand, when it is determined that the time t until the light amount becomes stable is larger than the reference value (S602: No), the data processing unit 203 outputs (displays) a warning to the output unit 205 (display) (S605). For example, the data processing unit 203 may display a warning for encouraging the replacement of the LED light source 301, a warning indicating that the replacement time of the LED light source 301 has arrived, and the like on the output unit 205 (display). The data processing unit 203 may output, from the output unit 205 (lamp or speaker) that outputs the state of the LED light source 301, light or sound that urges replacement of the LED light source 301, light or sound indicating that the replacement time of the LED light source 301 has arrived, and the like.

In the example of FIG. 6, the absorption analysis in S508 can be performed after the warning is output (S605). Alternatively, the absorption analysis in S508 may be prohibited in a case where the warning is output. The analysis result of the absorption analysis performed after the warning is output may be managed separately from the analysis result of the absorption analysis performed without warning.

### (Replacement time prediction method for LED light source 301)

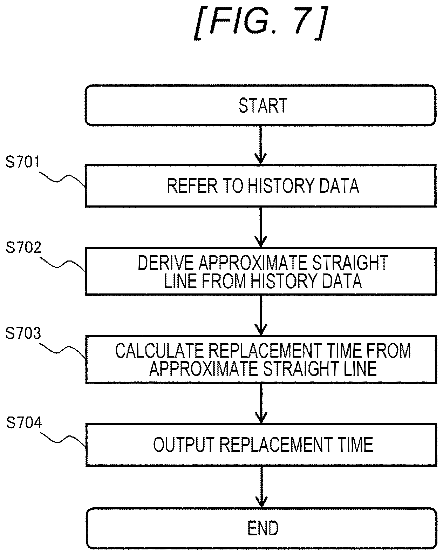

FIG. 7 is a flowchart illustrating details of the replacement time prediction processing. For example, the processor of the data processing unit 203 executes each step of the flowchart of FIG. 7 by executing the replacement time prediction program 2033c stored in the auxiliary storage unit 2033.

First, the data processing unit 203 refers to the history data 2033a of the auxiliary storage unit 2033 (S701).

The data processing unit 203 acquires the time t until the light amount becomes stable for each energization time T of the LED light source 301 from the history data 2033a, and derives an approximate straight line using the acquired time t until the light amount becomes stable for each energization time T of the LED light source 301 (S702). This approximate straight line is derived using a least squares method or the like. Note that, linear approximation is performed in the example of FIG. 7, alternatively, exponential approximation, logarithmic approximation, polynomial approximation, power approximation, or moving average approximation may be performed.

The data processing unit 203 predicts the replacement time of the LED light source 301 from the derived approximate straight line (S703). For example, the data processing unit 203 calculates the energization time T until the approximate straight line reaches an upper limit value of the time t until the light amount becomes stable, and sets the calculated energization time T as the replacement time.

Then, the data processing unit 203 outputs (displays) the replacement time to the output unit 205 (display) (S704). For example, the data processing unit 203 outputs (displays), to the output unit 205 (display), the remaining energization time until the LED light source 301 is replaced, the remaining operating time of the automatic analysis device 100, the replacement date and time when replacement of the LED light source 301 is recommended, and the like as the replacement time.

### (Effects of present embodiment)

In the present embodiment, by using the time t until the light amount of the LED light source 301 becomes stable (rising characteristic), it is possible to determine the state of each LED light source 301 and predict the replacement time while reflecting the state of the LED light source 301 that changes over time with the energization time. As a result, it is possible to reduce the maintenance cost required for light source replacement, reduce the workload burden other than the routine work of an operator, and the like by reducing the replacement frequency of the LED light source 301. Furthermore, the number of light sources to be discarded is reduced because the operating time exceeds a certain period of time although the amount of light is sufficient, which leads to a reduction in environmental load.

In the present embodiment, unlike PTL 2 described above, a new measurement system for monitoring the current and voltage applied to the LED light source 301 is not required.

Next, a method of state determination and replacement time prediction of the LED light source 301 as a light source unit will be described below with reference to Example 1, Example 2, and Example 3. In the present disclosure, the state determination and the replacement time prediction of the LED light source 301 are performed using the knowledge that there is a difference in the time from when the LED is turned on to when the light amount becomes stable according to the energization time of the LED light source 301.

### <Example 1>

In Example 1, a phenomenon that there is a difference in time from when the LED is turned on until the light amount becomes stable according to the energization time of the LED is confirmed. Therefore, light amount variation immediately after the LED used for the light source unit (LED light source 301) is turned on was measured by a spectroscope (USB2000 small fiber optical spectrometer, manufactured by Ocean Insight Corporation). Here, a white LED was used in which light of a broadband wavelength (approximately 370 nm to 800 nm) was extracted from a light-emitting chip that extracts ultraviolet light and a phosphor installed on the light-emitting chip.

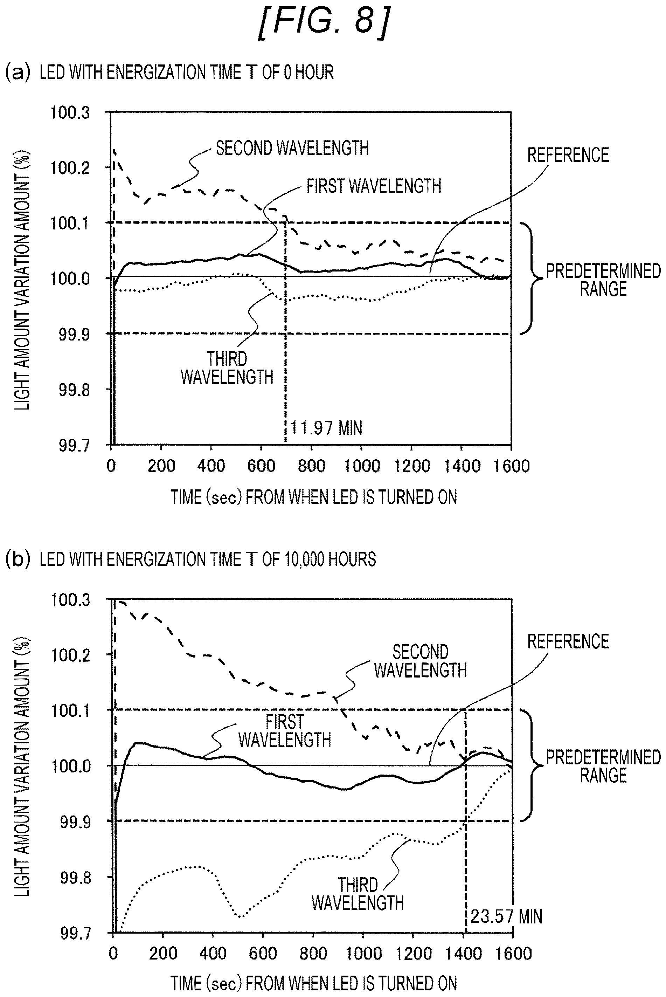

FIG. 8 is a diagram illustrating results of light amount variation immediately after white LEDs with energization times of 0 hour (new one) and 10,000 hours (subjected to 10,000 hour measurement) are turned on. The horizontal axis represents the time (sec) from when the LED is turned on, and the vertical axis represents the light amount variation amount (%) when the light amount after a lapse of a predetermined time (1,800 sec (30 minutes)) from when the LED is turned on is set to 100%. In the present example, the light amount 30 minutes after the LED is turned on is set to 100% with the light amount stable after the lapse of a predetermined time from the LED is turned on as an example of the reference. However, the definition of the "predetermined time" is not limited thereto, and may be set to about 10 minutes for a small automatic analysis device and about 90 minutes for a large automatic analysis device depending on a size of the automatic analysis device. For example, the predetermined time is shorter than the warm-up time from the activation of the automatic analysis device 100 until the automatic analysis device 100 becomes a measurable state. In this way, since the state determination and the replacement time prediction of the LED light source 301 can be performed within the warm-up time, it is possible to prevent a decrease in the throughput of absorption analysis.

In the present example, as the time t until the light amount becomes stable, the time until the light amount variation value per unit time falls within a range around the above-described reference is calculated. The range is, for example, 99.9% to 100.1% in a case where the range is set to "± 0.1%" around the above-described reference (light amount 30 minutes after the LED is turned on). In the example of FIG. 8, (a) the time t until all of the first wavelength, the second wavelength, and the third wavelength of the LED with the energization time of 0 hour fall within the predetermined range was 11.97 minutes. In FIG. 8 (b), the time until all of the first wavelength, the second wavelength, and the third wavelength of the LED with the energization time of 10,000 hours fall within the predetermined range was 23.57 minutes. Therefore, in the LED of which the energization time was 10,000 hours, a phenomenon was confirmed that the time t from when the LED was turned on to when the light amount became stable was long. Here, the results of the first wavelength (376 ± 5 nm), the second wavelength (415 ± 5 nm), and the third wavelength (700 ± 5 nm) are shown as the three kinds of wavelengths extracted from the white LED used in the automatic analysis device. However, the wavelength used in the automatic analysis device varies depending on characteristics of a reagent corresponding to a measurement item, a photodiode (photodetector) installed in a photometer, and the like. Therefore, the wavelength used for the measurement of the time t until the light amount becomes stable is determined on the basis of the wavelength used for the analysis of the reaction solution. The time until the light amount becomes stable may be obtained focusing only on one type of wavelength, or the time until the light amount becomes stable may be obtained at a plurality of wavelengths. In an LED including a light-emitting chip such as a white LED, the LED element characteristics may be reflected by focusing on a wavelength close to the wavelength of the light-emitting chip. Note that, even in a case of the LED formed of a single light-emitting chip or in a case where the light extracted from the two or more kinds of LEDs are multiplexed, the point of focusing on the time t until the light amount becomes stable is the same, and such LEDs can be applied.

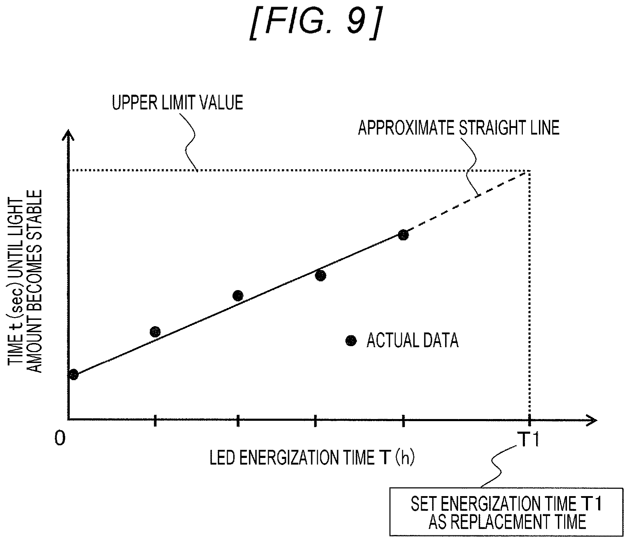

FIG. 9 is a diagram illustrating a correlation between an energization time T of the LED and a time t from when the LED is turned on to when the light amount becomes stable. The above knowledge is a factor such as aging of the light-emitting chip, the phosphor, the resin, and the like, and thermal influence from the surrounding environment, and thus is a characteristic change according to the energization time T. Therefore, in a case where the time t until the light amount becomes stable is calculated for each energization time for the LED light source 301 mounted on the automatic analysis device, as illustrated in FIG. 9, the energization time T of the LED and the time t until the light amount becomes stable show a linear correlation. As indicated by a dotted line in FIG. 9, the correlation between the time t from when the LED is turned on to when the light amount becomes stable and the energization time T can be expressed by an approximate straight line calculated from a plurality of actual data. From this approximate straight line, an energization time T1 at which the time t until the light amount becomes stable exceeds an upper limit value is calculated, and this T1 is set as the replacement time. Note that, in some cases, not the approximate straight line but the approximate curve may have a higher correlation coefficient, so that the calculation method of the correlation can be appropriately changed depending on the operation of each device. It is considered that there is an individual difference in the initial light amount of the LED element and the state inside the element. In the present example, the correlation between the time t from when the LED is turned on to when the light amount becomes stable and the energization time T is derived from the actual data for each LED used for the LED light source 301. Thereby, the optimal replacement time for each individual can be calculated, and a replacement frequency of the LED light source 301 can be reduced.

### <Example 2>

In Example 2, the correlation between the energization time T of the LED and the time t from when the LED is turned on to when the light amount becomes stable is examined. A typical LED was used among white LEDs in which light of a broadband wavelength (approximately 370 nm to 800 nm) is extracted from a light-emitting chip that extracts ultraviolet light and a phosphor installed on the light-emitting chip. Then, light amount variation immediately after the LED used for the LED light source 301 is turned on was measured using a spectroscope (MCPD-9800, manufactured by Otsuka Electronics Co., Ltd.) and an integrating sphere. Note that, in order to keep the temperature of the LED constant, a mounting substrate of the LED was controlled to 37°C using a Peltier element.

Table 1 shows results indicating the energization time T of the LED and the time t from when the LED is turned on to when the light amount becomes stable. When the light amount at the stable light amount after a lapse of a certain time from when the LED was turned on (here, 30 minutes from when the LED was turned on) was taken as a reference (100%), the time until the light amount variation value fell within 100 ± 0.2% was taken as the time t (sec) until the light amount became stable in consideration of the resolution of the measurement system. As for the wavelength, as an example, the time t until the light amount became stable was calculated for light amount variation of 376 ± 5 nm, which is the first wavelength in FIG. 8. As shown in Table 1, it was confirmed that as energization time T of the LED increased, the time t until the light amount became stable became longer. Therefore, as illustrated in FIG. 9, it can be seen that there is an approximately linear correlation between the energization time T of the LED and the time t from when the LED is turned on to when the light amount becomes stable.

### [Table 1]

**Table 1 Time from when LED is turned on to when light amount becomes stable for each energization time of LED**

| | | | | |
|---|---|---|---|---|
| LED energization time T (h) | 1,000 | 2,000 | 3,000 | 4,000 |
| Time t (sec) until light amount becomes stable | 94 | 120 | 266 | 329 |

### <Example 3>

An example of a case where the light amount variation amount per unit time is used as a definition of the time until the light amount of the LED becomes stable will be described. Similarly to Example 1, a white LED was used in which light with a broadband wavelength (approximately 370 nm to 800 nm) was extracted from a light-emitting chip that extracts ultraviolet light and a phosphor installed on the light-emitting chip. Then, light amount variation immediately after the LED used for the LED light source 301 is turned on was measured by a spectroscope (USB2000 small fiber optical spectrometer, manufactured by Ocean Insight Corporation).

Table 2 shows results of the light amount variation amount per 60 seconds immediately after the white LEDs with the energization time of 0 hours and 10,000 hours are turned on. The light amount variation amount per 60 seconds is obtained as a slope per unit time when the light amount variation amount for 60 seconds is fitted using a least squares method or the like with a linear function. Here, as an example, a result of 376 ± 5 nm which is the first wavelength in FIG. 8 is shown.

### [Table 2]

**Table 2 Light amount variation amount per 60 seconds immediately after white LEDs with energization time of 0 hours and 10,000 hours are turned on**

| Unit time | LED with energization time of 0 hour | LED with energization time of 10,000 hours |
|---|---|---|
| 0 - 60 seconds | 24.1850 | 24.3901 |
| 20 - 80 seconds | 0.0522 | 0.1152 |
| 40 - 100 seconds | 0.0330 | 0.0860 |
| 60 - 120 seconds | 0.0081 | 0.0468 |
| 80 - 140 seconds | 0.0006 | 0.0152 |

The unit time here is not limited to 60 seconds, and the definition is not limited thereto. This is synonymous with evaluating the slope of the light amount variation when the LED is turned on illustrated in FIG. 8, and the variation amount per unit time is large immediately after the LED is turned on and gradually converges to a small value. As shown in Table 2, in each of the light amount variation amounts per 60 seconds immediately after the light is on, the numerical value of the LED with the energization time of 10,000 hours is larger than that of the LED with the energization time of 0 hour. From this result, since there is a difference in light amount stability at the time of turning on the LED depending on the energization time, this numerical value can be used as a reference of the replacement time. For the LED light source 301 mounted as a light source of the automatic analysis device 100, a light amount variation amount (inclination) per unit time is calculated, and a time until the light amount variation amount reaches a threshold or less is defined as a time t until the light amount becomes stable. The threshold here refers to an upper limit value of the light amount variation amount that can maintain the analysis performance on the device. As for the time t calculated in the present example from when the LED is turned on until the light amount becomes stable, similarly to Example 1, the correlation with the energization time T can be calculated by an approximate straight line as illustrated in FIG. 9. From this approximate straight line, an energization time T1 in which the time t until the light amount becomes stable exceeds a predetermined certain constant value can be calculated, and T1 can be set as the replacement time. Even if the time until the light amount becomes stable satisfies the reference value in Example 1, in a case where the light amount variation amount per certain time does not satisfy the reference value in Example 3, it is also possible to provide a system in which the absorption analysis is interrupted. That is, in addition to the comparison between a measurement value of the time until the light amount becomes stable and the reference value, the comparison between a measurement value of the light amount variation amount per certain time and the reference value is combined, whereby the replacement time prediction based on the analysis performance required for the absorption analysis can be realized.

Note that the present disclosure is not limited to the above-described embodiments, and includes various modifications. For example, the above-described examples have been described in detail in order to describe the present disclosure in an easy-to-understand manner, and are not necessarily limited to those having all the described configurations. Furthermore, a part of the configuration of a certain example can be replaced with the configuration of another example, and the configuration of another example can be added to the configuration of a certain example. Furthermore, it is possible to add, delete, and replace other configurations for a part of the configuration of each example.

In the above embodiment, the time t until the light amount of the LED light source 301 becomes stable is calculated during the warm-up processing, and the state determination processing and the replacement time prediction processing of the LED light source 301 are executed. However, the timing of executing the state determination processing and the replacement time prediction processing is not limited to during the warm-up processing. For example, the state determination processing and the replacement time prediction processing of the LED light source 301 may be executed during the maintenance mode, or the state determination processing and the replacement time prediction processing of the LED light source 301 may be executed after a certain time elapses or after a certain number of inspections are performed.

### Reference Signs List

- 101: sample
- 102: sample cup
- 103: sample disk
- 104: reagent
- 105: reagent bottle
- 106: reagent disk
- 107: reaction solution
- 108: reaction cell
- 109: reaction disk
- 110: sample pipetting mechanism
- 111: reagent pipetting mechanism
- 112: solution stirring unit
- 113: absorbance measurement unit
- 114: cleaning unit
- 115: thermostatic fluid
- 201: control unit
- 202: light amount measurement circuit
- 203: data processing unit
- 2031: processor
- 2032: main storage unit
- 2033: auxiliary storage unit
- 2033a: history data
- 2033b: state determination program
- 2033c: replacement time prediction program
- 2034: input/output I/F
- 204: input unit
- 205: output unit
- 301: LED light source
- 302: spectrometer
- 3021: diffraction grating
- 3022: detector array
- 401: optical axis
- 402: light source-side slit
- 403: condensing lens
- 404: spectrometer-side slit

## Claims

1. An analysis device comprising:
a container configured to hold a liquid to be analyzed;
a light-emitting diode (LED) light source configured to irradiate the liquid in the container with light;
a photodetector configured to detect light emitted from the liquid when the liquid is irradiated with the light from the LED light source; and
a data processor configured to determine a state of the LED light source by using a time required until a light amount of the light from the LED light source is stabilized after the LED light source is turned on.

2. The analysis device according to claim 1, wherein
the data processor is configured to predict a replacement time of the LED light source based on a correlation between the time and an energization time of the LED light source.

3. The analysis device according to claim 2, wherein
the data processor is configured to: measure the time every energization time of the LED light source,
derive an approximate straight line from the time for each energization time of the LED light source; and
predict the replacement time of the LED light source based on the approximate straight line and a predetermined upper limit value of the time.

4. The analysis device according to claim 1 or 2, wherein
the time includes a time from when the LED light source is turned on until a light amount variation amount per unit time falls within a range based on a light amount after a lapse of a predetermined time from when the LED light source is turned on.

5. The analysis device according to claim 4, wherein
the predetermined time is shorter than a warm-up time from when the analysis device is activated to when the analysis device is in a measurable state.

6. The analysis device according to claim 1 or 2, wherein
the time includes a time until a light amount variation amount per unit time reaches a threshold or less after the LED light source is turned on.

7. The analysis device according to claim 1 or 2, wherein
the photodetector is configured to measure light amounts of light of a plurality of wavelengths, and
a wavelength used to measure the time is determined based on a wavelength used to analyze the liquid among the plurality of wavelengths.

8. The analysis device according to claim 1 or 2, wherein
the photodetector is configured to measure light amounts of light of a plurality of wavelengths, and
a wavelength used to measure the time is closest to a wavelength of a light-emitting chip of the LED light source.

9. The analysis device according to claim 1, wherein
the data processor is configured to output the determined state of the LED light source.

10. An analysis device comprising:
a container configured to hold a liquid to be analyzed;
a light-emitting diode (LED) light source configured to irradiate the liquid in the container with light;
a photodetector configured to detect light emitted from the liquid when the liquid is irradiated with light from the LED light source; and
a data processor configured to predict a replacement time of the LED light source based on a correlation between a time required until a light amount of the light from the LED light source is stabilized after the LED light source is turned on and an energization time of the LED light source.

11. The analysis device according to claim 10, wherein
the data processor is configured to: measure the time every energization time of the LED light source,
derive an approximate straight line from the time for each energization time of the LED light source; and
predict a replacement time of the LED light source based on the approximate straight line and a predetermined upper limit value of the time.

12. The analysis device according to claim 10, wherein
the time includes a time from when the LED light source is turned on until a light amount variation amount per unit time falls within a range based on a light amount after a lapse of a predetermined time from when the LED light source is turned on.

13. The analysis device according to claim 12, wherein
the predetermined time is shorter than a warm-up time from when the analysis device is activated to when the analysis device is in a measurable state.

14. The analysis device according to claim 10, wherein
the time includes a time until a light amount variation amount per unit time reaches a threshold or less after the LED light source is turned on.

15. The analysis device according to claim 10, wherein
the photodetector is configured to measure light amounts of light of a plurality of wavelengths, and
a wavelength used to measure the time is determined based on a wavelength used to analyze the liquid among the plurality of wavelengths.

16. The analysis device according to claim 10, wherein
the photodetector is configured to measure light amounts of light of a plurality of wavelengths, and
a wavelength used to measure the time is closest to a wavelength of a light-emitting chip of the LED light source.

17. The analysis device according to claim 10, wherein
the data processor is configured to output the predicted replacement time of the LED light source.

18. A determination method of determining a state of a light-emitting diode (LED) light source of an analysis device including a container configured to hold a liquid to be analyzed, the LED light source configured to irradiate the liquid in the container with light, and a photodetector configured to detect light emitted from the liquid when the liquid is irradiated with the light from the LED light source, the determination method comprising:
turning on the LED light source;
measuring a time required until a light amount of the light from the LED light source is stabilized after the LED light source is turned on; and
determining a state of the LED light source using the measured time.

19. A prediction method of predicting a replacement time of a light-emitting diode (LED) light source of an analysis device including a container configured to hold a liquid to be analyzed, the LED light source configured to irradiate the liquid in the container with light, and a photodetector configured to detect light emitted from the liquid when the liquid is irradiated with the light from the LED light source, the prediction method comprising:
turning on the LED light source;
measuring a time required until a light amount of the light from the LED light source is stabilized after the LED light source is turned on; and
predicting a replacement time of the LED light source based on a correlation between the measured time and an energization time of the LED light source.

## Amended claims

### Amended claims under Art. 19.1 PCT

1. An analysis device comprising:
a container configured to hold a liquid to be analyzed;
a light-emitting diode (LED) light source configured to irradiate the liquid in the container with light;
a photodetector configured to detect light emitted from the liquid when the liquid is irradiated with the light from the LED light source; and
a data processor configured to determine a state of the LED light source by using a time required until a light amount of the light from the LED light source is stabilized after the LED light source is turned on, wherein
the data processor is configured to predict a replacement time of the LED light source based on a correlation between the time and an energization time of the LED light source.

2. The analysis device according to claim 1, wherein
the data processor is configured to: measure the time every energization time of the LED light source,
derive an approximate straight line from the time for each energization time of the LED light source; and
predict the replacement time of the LED light source based on the approximate straight line and a predetermined upper limit value of the time.

3. The analysis device according to claim 1, wherein
the time includes a time from when the LED light source is turned on until a light amount variation amount per unit time falls within a range based on a light amount after a lapse of a predetermined time from when the LED light source is turned on.

4. The analysis device according to claim 3, wherein
the predetermined time is shorter than a warm-up time from when the analysis device is activated to when the analysis device is in a measurable state.

5. The analysis device according to claim 1, wherein
the time includes a time until a light amount variation amount per unit time reaches a threshold or less after the LED light source is turned on.

6. The analysis device according to claim 1, wherein
the photodetector is configured to measure light amounts of light of a plurality of wavelengths, and
a wavelength used to measure the time is determined based on a wavelength used to analyze the liquid among the plurality of wavelengths.

7. The analysis device according to claim 1, wherein
the photodetector is configured to measure light amounts of light of a plurality of wavelengths, and
a wavelength used to measure the time is closest to a wavelength of a light-emitting chip of the LED light source.

8. The analysis device according to claim 1, wherein
the data processor is configured to output the determined state of the LED light source.

9. An analysis device comprising:
a container configured to hold a liquid to be analyzed;
a light-emitting diode (LED) light source configured to irradiate the liquid in the container with light;
a photodetector configured to detect light emitted from the liquid when the liquid is irradiated with light from the LED light source; and
a data processor configured to predict a replacement time of the LED light source based on a correlation between a time required until a light amount of the light from the LED light source is stabilized after the LED light source is turned on and an energization time of the LED light source.

10. The analysis device according to claim 9, wherein
the data processor is configured to: measure the time every energization time of the LED light source,
derive an approximate straight line from the time for each energization time of the LED light source; and
predict a replacement time of the LED light source based on the approximate straight line and a predetermined upper limit value of the time.

11. The analysis device according to claim 9, wherein
the time includes a time from when the LED light source is turned on until a light amount variation amount per unit time falls within a range based on a light amount after a lapse of a predetermined time from when the LED light source is turned on.

12. The analysis device according to claim 11, wherein
the predetermined time is shorter than a warm-up time from when the analysis device is activated to when the analysis device is in a measurable state.

13. The analysis device according to claim 9, wherein
the time includes a time until a light amount variation amount per unit time reaches a threshold or less after the LED light source is turned on.

14. The analysis device according to claim 9, wherein
the photodetector is configured to measure light amounts of light of a plurality of wavelengths, and
a wavelength used to measure the time is determined based on a wavelength used to analyze the liquid among the plurality of wavelengths.

15. The analysis device according to claim 9, wherein
the photodetector is configured to measure light amounts of light of a plurality of wavelengths, and
a wavelength used to measure the time is closest to a wavelength of a light-emitting chip of the LED light source.

16. The analysis device according to claim 9, wherein
the data processor is configured to output the predicted replacement time of the LED light source.

17. A determination method of determining a state of a light-emitting diode (LED) light source of an analysis device including a container configured to hold a liquid to be analyzed, the LED light source configured to irradiate the liquid in the container with light, and a photodetector configured to detect light emitted from the liquid when the liquid is irradiated with the light from the LED light source, the determination method comprising:
turning on the LED light source;
measuring a time required until a light amount of the light from the LED light source is stabilized after the LED light source is turned on;
determining a state of the LED light source using the measured time; and
predicting a replacement time of the LED light source based on a correlation between the measured time and an energization time of the LED light source.

18. A prediction method of predicting a replacement time of a light-emitting diode (LED) light source of an analysis device including a container configured to hold a liquid to be analyzed, the LED light source configured to irradiate the liquid in the container with light, and a photodetector configured to detect light emitted from the liquid when the liquid is irradiated with the light from the LED light source, the prediction method comprising:
turning on the LED light source;
measuring a time required until a light amount of the light from the LED light source is stabilized after the LED light source is turned on; and
predicting a replacement time of the LED light source based on a correlation between the measured time and an energization time of the LED light source.

Statement under Art. 19.1 PCT
The amendments clarify the differences between the present invention and documents 1 to 5.

The amended present invention is as per the amendments under Article 19 of PCT.

In the international search report, the present inventions according to claims 1 and 18 are found to be not novel and lack an inventive step by document 1 (WO 2022-196346 A1).

However, in the present amendments, the feature of claim 2 (now cancelled), which was found to be novel and involve an inventive step, has been added to claims 1 and 18, respectively.

Accordingly, we believe that the present inventions according to the amended claims 1 and 18 are novel and involve inventive step in view of documents 1 to 5.
